(19) **Europäisches Patentamt / European Patent Office / Office européen des brevets**

(11) **EP 4 513 450 A1**

(12) **EUROPEAN PATENT APPLICATION**

(43) Date of publication:
26.02.2025 Bulletin 2025/09

(51) International Patent Classification (IPC):
*G06V 20/58* (2022.01)   *G01S 13/00* (2006.01)

(21) Application number: 23213329.8

(22) Date of filing: 30.11.2023

(52) Cooperative Patent Classification (CPC):
G06V 20/58; G01S 13/867; G01S 13/89; G01S 13/931

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 21.08.2023 CN 202311054341

(71) Applicant: Chongqing Changan Automobile Co., Ltd.
Chongqing 400023 (CN)

(72) Inventors:
• XIONG, Xinli
  Chongqing 400023 (CN)
• XIE, Binyang
  Chongqing 400023 (CN)
• CHEN, Jianbin
  Chongqing 400023 (CN)
• TAN, Yu
  Chongqing 400023 (CN)
• WAN, Kailin
  Chongqing 400023 (CN)

(74) Representative: M. Zardi & Co S.A.
Via G. B. Pioda, 6
6900 Lugano (CH)

(54) **CROSS-MODAL CROSS-LAYER TARGET ASSOCIATION METHOD AND APPARATUS, ELECTRONIC DEVICE, AND MEDIUM**

(57) A cross-modal cross-layer target association method and apparatus, an electronic device, and a medium are disclosed, belonging to the field of sensor data fusion. The method includes: acquiring and preprocessing visual data and radar data; transforming a position coordinate of a radar observation target in the preprocessed radar data into a corresponding pixel coordinate; acquiring first radar observation targets projectable into a target detection box in the visual data according to the pixel coordinate corresponding to the radar observation target; calculating a pixel distance between a pixel coordinate corresponding to each first radar observation target and the target detection box; associating the radar observation target in the radar data and a visual observation target in the visual data with a tracking target; screening out a first tracking target associated with the visual observation target and not associated with the radar observation target; calculating a relative distance between each first radar observation target and a vehicle; and determining a radar observation target with the minimum relative distance and pixel distance as an associated target of the corresponding first tracking target.

Acquire visual data and radar data in a target scene — S1

Preprocess the visual data and the radar data — S2

Transform a position coordinate of a radar observation target in the preprocessed radar data into a corresponding pixel coordinate in an image coordinate system — S3

Acquire first radar observation targets projectable into a target detection box in the visual data according to the pixel coordinate corresponding to the radar observation target — S4

Calculate a pixel distance between a pixel coordinate corresponding to each first radar observation target and the target detection box in the visual data — S5

Associate the radar observation target in the preprocessed radar data and a visual observation target in the preprocessed visual data with a tracking target — S6

Screen out a first tracking target not associated with the radar observation target — S7

Calculate a relative distance between each first radar observation target and a vehicle — S8

Determine a radar observation target with the minimum relative distance and pixel distance as an associated target of the corresponding first tracking target — S9

Fig. 1

## Description

### Field of the Invention

The present application relates to the technical field of sensor data fusion, particularly to the field of multi-source heterogeneous sensor target matching, and more particularly to a cross-modal cross-layer target association method and apparatus, an electronic device, and a computer-readable storage medium.

### Background of the Invention

A target data association technology is one of key technologies in a multi-sensor target tracking and information fusion system, and is mainly used for realizing matching of a plurality of targets between frames, including the birth of new targets, the death of old targets, and the matching of target IDs between historical frames and current frames.

At present, the most common data association algorithms are a nearest neighbor algorithm, a probabilistic data association algorithm, a joint probabilistic data association algorithm, and so on. A target association method based on target attribute information is the most mature association method. However, the association method based on target attribute information requires high similarity of target attributes outputted by heterogeneous sensors. If this condition cannot be satisfied, the association method based on target attribute information will not realize the association with large deviation of the same target attributes outputted by the heterogeneous sensors. Since different types of sensors, such as vision, long-range millimeter wave radar, short-range millimeter wave radar, and ultrasonic radar, are deployed in an intelligent driving vehicle system and these sensors are interfered by an external environment and the working principles are different, it is difficult to ensure the similarity of attributes of the same target observed by different types of sensors.

In traditional methods, in order to achieve multi-source heterogeneous sensor target matching, complex operations are needed, and the overall efficiency and accuracy are low, which affects the accuracy and timeliness of target tracking.

### Summary of the Invention

A first object of the present application is to provide a cross-modal cross-layer target association method to solve the problem of low overall efficiency and accuracy of target association in the existing technology. A second object is to provide a cross-modal cross-layer target association apparatus. A third object is to provide an electronic device. A fourth object is to provide a computer-readable storage medium.

In order to achieve the foregoing objects, the present application adopts the following technical solution.

A cross-modal cross-layer target association method includes:

acquiring visual data and radar data in a target scene;

preprocessing the visual data and the radar data;

transforming a position coordinate of a radar observation target in the preprocessed radar data into a corresponding pixel coordinate in an image coordinate system;

acquiring first radar observation targets projectable into a target detection box in the visual data according to the pixel coordinate corresponding to the radar observation target;

calculating a pixel distance between a pixel coordinate corresponding to each first radar observation target and the target detection box in the visual data;

associating the radar observation target in the preprocessed radar data and a visual observation target in the preprocessed visual data with a tracking target;

screening out a first tracking target associated with the visual observation target and not associated with the radar observation target;

calculating a relative distance between each first radar observation target and a vehicle; and

determining a radar observation target with the minimum relative distance and pixel distance as an associated target of the corresponding first tracking target.

According to the foregoing technical means, interference data is eliminated by preprocessing the visual data and the radar data, whereby subsequent target association data has higher accuracy and higher efficiency. By projecting the radar observation target into the target detection box in the visual data, the corresponding associated target can be quickly determined when the unassociated first tracking target is processed subsequently, thus further improving the association efficiency.

In the embodiments of the present application, the preprocessing the visual data and the radar data includes:

filtering a target beyond a field of view of a visual data acquisition device and a target having a target code of 0 in the visual data; and

filtering a target beyond a field of view of a radar data acquisition device and a stationary target having a ground height greater than a predetermined height and an obstacle probability less than a predetermined threshold in the radar data.

The target having the target code of 0 belongs to an observation target that does not satisfy tracking target conditions and does not belong to the tracking target. Through the foregoing technical means, part of actually acquired data that does not conform to a standard field of view of the data acquisition device may be eliminated. At the same time, a target that does not need to be tracked may be eliminated during the processing of the visual data, and a target that will not affect intelligent driving may be eliminated during the processing of the radar data, thus effectively preventing erroneous association of targets caused by projection of a guardrail target of a ramp or a radar observation target in a tunnel into the target detection box in subsequent processing, and improving the efficiency of subsequent association.

In the embodiments of the present application, the transforming a position coordinate of a radar observation target in the preprocessed radar data into a corresponding pixel coordinate in an image coordinate system includes:

> transforming the position coordinate of the radar observation target in a radar coordinate system into a camera coordinate system according to a pinhole camera model; and

> transforming the position coordinate of the radar observation target that is transformed into the camera coordinate system into the image coordinate system according to a principle of camera imaging, and obtaining the corresponding pixel coordinate of the position coordinate of the radar observation target in the image coordinate system.

Through the foregoing technical means, the acquired data in different coordinate systems is projected into the same coordinate system, which is beneficial to improve the processing efficiency of subsequent target association.

In the embodiments of the present application, the acquiring first radar observation targets projectable into a target detection box in the visual data according to the pixel coordinate corresponding to the radar observation target includes:

> determining a projection range corresponding to the radar observation target according to the target detection box in the visual data and a predetermined range parameter; and

> determining that the radar observation target belongs to the first radar observation targets if the pixel coordinate corresponding to the radar observation target is within the projection range.

Through the foregoing technical means, the first radar observation targets corresponding to the target detection box in the visual data are determined, and the radar observation target which will affect a subsequent association effect is screened out to improve the target association accuracy.

In the embodiments of the present application, the predetermined range parameter includes an abscissa axis predetermined range parameter X and an ordinate axis predetermined range parameter Y

Whether the pixel coordinate corresponding to the radar observation target is within the projection range is determined according to the following formula:

$$\begin{cases} u_r > u_{lt} - X \\ u_r < u_{rb} + X \\ v_r > v_{lt} - Y \\ v_r < v_{rb} + Y \end{cases}$$

where $u_r$ is an abscissa axis pixel coordinate corresponding to the radar observation target; $v_r$ is an ordinate axis pixel coordinate corresponding to the radar observation target; $u_{lt}$ is an abscissa axis pixel coordinate of an upper left vertex of the target detection box; $v_{lt}$ is an ordinate axis pixel coordinate of the upper left vertex of the target detection box; $u_{rb}$ is an abscissa axis pixel coordinate of a lower right vertex of the target detection box; and $v_{rb}$ is an ordinate axis pixel coordinate of the lower right vertex of the target detection box.

Through the foregoing technical means, according to inherent parameters of projection transformation of the visual data acquisition device and the radar data acquisition device, the radar observation target beyond the projection range is eliminated, thus reducing the data amount of subsequent association processing, and improving efficiency and accuracy.

In the embodiments of the present application, the associating the radar observation target in the preprocessed radar data and a visual observation target in the preprocessed visual data with a tracking target includes:

> calculating a first Mahalanobis distance between longitudinal and transverse distances of each visual observation target in the visual data and longitudinal and transverse distances of the tracking target;

> calculating a second Mahalanobis distance between longitudinal and transverse velocities of each visual observation target in the visual data and longitudinal and transverse velocities of the tracking target;

calculating a third Mahalanobis distance between longitudinal and transverse distances of the radar observation target in the radar data and longitudinal and transverse distances of the tracking target;

calculating a fourth Mahalanobis distance between longitudinal and transverse velocities of the radar observation target in the radar data and longitudinal and transverse velocities of the tracking target; and

associating the visual observation target with the tracking target using an association relationship between the first Mahalanobis distance and the second Mahalanobis distance and associating the radar observation target with the tracking target using an association relationship between the third Mahalanobis distance and the fourth Mahalanobis distance, based on an elliptical association gate.

Through the foregoing technical means, the Mahalanobis distances are calculated based on attribute parameters of the visual observation target and the radar observation target, so as to realize the association of the radar observation target and the visual observation target with the tracking target.

In the embodiments of the present application, an associated target number is recorded after the radar observation target in the preprocessed radar data and the visual observation target in the preprocessed visual data are associated with the tracking target.

Tracking association is performed based on the target number when the target number in the visual data and the radar data is unchanged.

Through the foregoing technical means, after the first association, the tracking association is directly performed according to the target number, thus shortening the calculation time in the process of target tracking and improving the target association efficiency.

In the embodiments of the present application, the determining a radar observation target with the minimum relative distance and pixel distance as an associated target of the corresponding first tracking target includes:

sorting the pixel distances of the first radar observation targets in ascending order;

sorting the relative distances between the first radar observation targets and the vehicle in ascending order; and

determining a radar observation target with the consistently sorted and minimum relative distance and pixel distance as the associated target of the corresponding first tracking target according to the sorting.

Through the foregoing technical means, the consistently sorted minimum radar observation target is determined as the associated target corresponding to the first tracking target by sorting, which can improve the target association efficiency.

According to a second aspect of the present application, a cross-modal cross-layer target association apparatus is provided. The apparatus includes:

a data acquisition unit, configured to acquire visual data and radar data in a target scene;

a data preprocessing unit, configured to preprocess the visual data and the radar data;

a coordinate transformation unit, configured to transform a position coordinate of a radar observation target in the preprocessed radar data into a corresponding pixel coordinate in an image coordinate system;

an observation target projection screening unit, configured to acquire first radar observation targets projectable into a target detection box in the visual data according to the pixel coordinate corresponding to the radar observation target;

a pixel distance calculation unit, configured to calculate a pixel distance between a pixel coordinate corresponding to each first radar observation target and the target detection box in the visual data;

a target association unit, configured to associate the radar observation target in the preprocessed radar data and a visual observation target in the preprocessed visual data with a tracking target;

an unassociated observation target screening unit, configured to screen out a first tracking target associated with the visual observation target and not associated with the radar observation target;

a relative distance calculation unit, configured to calculate a relative distance between each first radar observation target and a vehicle; and

an associated target determination unit, configured to determine a radar observation target with the minimum relative distance and pixel distance as an associated target of the corresponding first tracking target.

Through the foregoing technical means, the apparatus eliminates interference data by preprocessing the visual data and the radar data through the data preprocessing unit, whereby subsequent target association data has higher accuracy and higher efficiency. By projecting the radar observation target into the target detection box in the visual data through the observation target projection screening unit, the corresponding associated target can be quickly determined when the unassociated first tracking target is processed subsequently, thus further improving the association efficiency.

In the embodiments of the present application, the data preprocessing unit includes:

a visual data preprocessing module, configured to filter a target beyond a field of view of a visual data acquisition device and a target having a target code of 0 in the visual data; and

a radar data preprocessing module, configured to filter a target beyond a field of view of a radar data acquisition device and a stationary target having a ground height greater than a predetermined height and an obstacle probability less than a predetermined threshold in the radar data.

Through the foregoing technical means, part of actually acquired data that does not conform to a standard field of view of the data acquisition device may be eliminated. At the same time, a target that does not need to be tracked may be eliminated during the processing of the visual data through the visual data preprocessing module, and a target that will not affect intelligent driving may be eliminated during the processing of the radar data through the radar data preprocessing module, thus effectively preventing erroneous association of targets caused by projection of a guardrail target of a ramp or a radar observation target in a tunnel into the target detection box in subsequent processing, and improving the efficiency of subsequent association.

In the embodiments of the present application, the coordinate transformation unit includes:

a radar coordinate system transformation module, configured to transform the position coordinate of the radar observation target in a radar coordinate system into a camera coordinate system according to a pinhole camera model; and

a camera coordinate system transformation module, configured to transform the position coordinate of the radar observation target that is transformed into the camera coordinate system into the image coordinate system according to a principle of camera imaging, and obtain the corresponding pixel coordinate of the position coordinate of the radar observation target in the image coordinate system.

Through the foregoing technical means, the acquired data in different coordinate systems is projected into the same coordinate system by the radar coordinate system transformation module and the camera coordinate system transformation module, which is beneficial to improve the processing efficiency of subsequent target association.

According to a third aspect of the present application, an electronic device is provided, including: a memory, a processor, and a computer program stored on the memory and executable on the processor. The processor executes the program to implement the cross-modal cross-layer target association method.

According to a fourth aspect of the present application, a computer-readable storage medium is provided, including a computer program stored thereon. The program is executed by a processor to implement the cross-modal cross-layer target association method.

The beneficial effects of the present invention are as follows:

(1) The cross-modal cross-layer target association method provided by the present application can realize the association of multi-sensor output targets, and can better realize the target association with large attribute deviation of the same target detected by different sensors.

(2) According to the cross-modal cross-layer target association method provided by the present application, interference data is eliminated by preprocessing the visual data and the radar data, whereby subsequent target association data has higher accuracy and higher efficiency. By projecting the radar observation target into the target detection box in the visual data, the corresponding associated target can be quickly determined when the unassociated first tracking target is processed subsequently, thus further improving the association efficiency.

## Brief Description of the Drawings

Fig. 1 is a flowchart of a cross-modal cross-layer target association method according to an embodiment of the present application;

Fig. 2 is a technical roadmap for optimizing the efficiency of target association by a cross-modal cross-layer target association method according to the present application;

Fig. 3a is an association effect diagram of an association method based on target attribute information in the existing technology under the condition of road traffic jam and sudden brake stop of a front vehicle;

Fig. 3b is an association effect diagram of a cross-modal cross-layer target association method according to the present application under the condition of road traffic jam and sudden brake stop of a front vehicle;

Fig. 4a is an association effect diagram of an association method based on target attribute information in the existing technology under the condition that vehicles are parked on the side of a road;

Fig. 4b is an association effect diagram of a cross-modal cross-layer target association method according to the present application under the condition that vehicles are parked on the side of a road;

Fig. 5a is an association effect diagram of an association method based on target attribute information in the existing technology under the condition that a front vehicle travels by changing lanes and a vehicle in front of the front vehicle is stationary;

Fig. 5b is an association effect diagram of a cross-modal cross-layer target association method according to the present application under the condition that a front vehicle travels by changing lanes and a vehicle in front of the front vehicle is stationary; and

Fig. 6 is a block diagram of a cross-modal cross-layer target association apparatus according to an embodiment of the present application.

**Detailed Description of the Embodiments**

Embodiments of the present application will be described below with reference to the accompanying drawings and preferred embodiments, and other advantages and effects of the present application will be readily apparent to those skilled in the art from the application in this specification. The present application may also be practiced or applied by other different embodiments, and the details of this specification may be modified or altered from different viewpoints and applications without departing from the spirit of the present application. It will be understood that the preferred embodiments are merely illustrative of the present application and are not intended to limit the scope of protection of the present application.

It is to be noted that the figures provided in the following embodiments merely illustrate the basic idea of the present application schematically, and thus the figures only show the components related to the present application rather than being drawn according to the number, shape, and size of the components in actual implementation. The type, number, and proportion of the components in actual implementation may be arbitrarily changed, and the layout of the components may be more complicated.

In the embodiments of the present application, the terms "first", "second", "third", and the like are used for differentiating descriptions only and are not understood to indicate or imply relative importance.

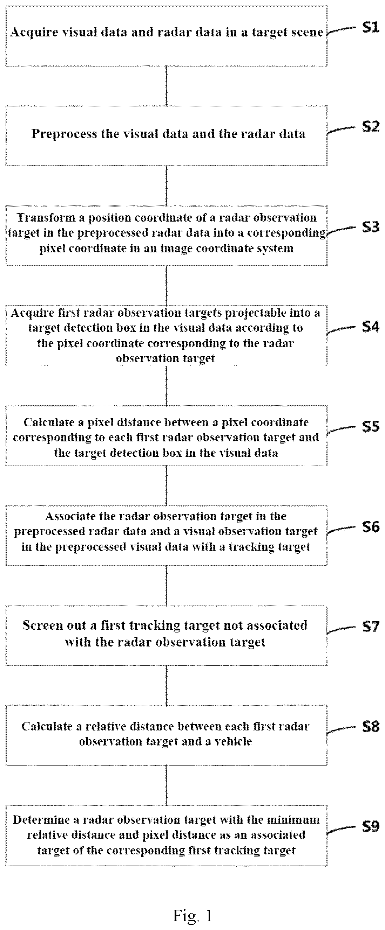

Fig. 1 is a flowchart of a cross-modal cross-layer target association method according to an embodiment of the present application. As shown in Fig. 1, the method includes the following steps.

At S 1, visual data and radar data in a target scene are acquired. In the embodiments of the present application, the visual data is acquired by a visual data acquisition device, and the radar data is acquired by a radar data acquisition device. In the embodiments of the present application, output signals of the visual data acquisition device and the radar data acquisition device can be directly acquired by using a CANFD data acquisition card according to a CANFD signal transmission protocol of the visual data acquisition device and the radar data acquisition device, and the visual data and the radar data are obtained by analysis. In the embodiments of the present application, the target scene is divided into a front-view scene, a left-view scene, a rear-view scene, and a right-view scene according to the arrangement of the vision data acquisition device and the radar data acquisition device of a vehicle. In one embodiment of the present application, the visual data is acquired by a camera, and the radar data is acquired by a millimeter wave radar, a laser radar, and the like.

At S2, the visual data and the radar data are preprocessed. In the embodiments of the present application, the visual data and the radar data are preprocessed in the following technical means.

At S201, a target beyond a field of view of the visual data acquisition device and a target having a target code of 0 in the visual data are filtered.

At S202, a target beyond a field of view of a radar data acquisition device and a stationary target having a ground height greater than a predetermined height and an obstacle probability less than a predetermined threshold in the radar data are filtered.

The target having the target code of 0 belongs to an observation target that does not satisfy tracking target conditions and does not belong to a tracking target. Through the foregoing technical means, part of actually acquired data that does not conform to a standard field of view of the data acquisition device may be eliminated. At the same time, a target that does not need to be tracked may be eliminated during the processing of the visual data, and a target that will not affect intelligent driving may be eliminated during the processing of the radar data, thus effectively preventing erroneous association of targets caused by projection of a guardrail target of a ramp or a radar observation target in a tunnel into the target detection box in subsequent processing, and improving the efficiency of subsequent association.

In one embodiment of the present application, the predetermined height is a ground height of 4 m, and the predetermined threshold of the obstacle probability is 60%. That is, when preprocessing the radar data, a target beyond the field of view of the radar data acquisition device and a stationary target having a ground height greater than 4 m and an obstacle probability less than 60% should be eliminated at the same time.

In other embodiments, the visual data and the radar data may be preprocessed according to an observation attribute of the observation target. For example, whether filtering is needed may be determined according to the jump of the observation attribute, which may be velocity, position, acceleration, and the like. The jump of the observation attribute means that the observation attribute of the same observation target in the previous frame of data and the observation attribute in the next frame of data do not conform to the kinematic law of the vehicle. For example, if the observation attribute is velocity, a time interval of each frame of data is $t$, the maximum acceleration of the vehicle is $a_{max}$, the velocity of the observation target in the previous frame of data is vj, and the velocity of the observation target in the next frame of data is $v_2$. If $v_2 > v_1 + a_{max}t$, the observation attribute of the observation target jumps and needs to be filtered out. For position and acceleration, filtering may be performed based on vehicle parameters and kinematics laws.

In other embodiments, the observation target may be tracked briefly, and the target with short appearance time may be filtered out to realize the preprocessing of the visual data and the radar data. The short appearance time means that the number of frames of the observation target appearing in the acquired data is less than a predetermined number of frames.

At S3, a position coordinate of a radar observation target in the preprocessed radar data is transformed into a corresponding pixel coordinate in an image coordinate system. Specifically:
The position coordinate of the radar observation target in a radar coordinate system is transformed into a camera coordinate system according to a pinhole camera model.

The position coordinate of the radar observation target that is transformed into the camera coordinate system is transformed into the image coordinate system according to a principle of camera imaging, and the corresponding pixel coordinate of the position coordinate of the radar observation target in the image coordinate system is obtained.

The visual data acquired by the CANFD data acquisition card includes visual observation targets, a target detection box corresponding to each visual observation target, a position coordinate corresponding to each visual observation target, longitudinal and transverse velocities, longitudinal and transverse distances, and a target number. The radar data includes radar observation targets, a position coordinate corresponding to each radar observation target, longitudinal and transverse velocities, longitudinal and transverse distances, and a target number.

In order to facilitate coordinate system transformation, a position coordinate set of the visual observation targets in the visual data is denoted as P, and a position coordinate set of the radar observation targets in the radar data is denoted as Q. Then P and Q can be represented by the following formula:

$$\begin{cases} P = \begin{bmatrix} p_1 & \cdots & p_n \end{bmatrix} \\ Q = \begin{bmatrix} q_1 & \cdots & q_n \end{bmatrix} \end{cases}$$

In the formula, $P_i$ represents the position coordinate of an $i^{th}$ frame of the visual observation target in the visual data, and $q_i$ represents the position coordinate of an $i^{th}$ frame of the radar observation target in the radar data.

The principle of the pinhole camera model is that a relative position relationship between any two coordinate systems may be described by a rotation matrix $R$ and a translation vector $T$.

During the coordinate system transformation, the position coordinate of the radar observation target in the radar coordinate system may be transformed into the camera coordinate system according to the pinhole camera model through the following formula:

$$P_i = Rq_i + T$$

In the formula, $P_i$ represents the coordinate of the radar observation target in the camera coordinate system, $R$ is the rotation matrix between the radar coordinate system and the camera coordinate system, and $T$ is the translation vector between the radar coordinate system and the camera coordinate system.

Then the position coordinate of the radar observation target that is transformed into the camera coordinate system may be transformed into the image coordinate system according to the principle of camera imaging through the following formula:

$$p_i = KP_i$$

In the formula, $K$ represents an internal parameter matrix of a camera, and $p_i$ represents the corresponding pixel coordinate of the radar observation target in the image coordinate system. Through the foregoing technical means, the acquired data in different coordinate systems is projected into the same coordinate system, which is beneficial to improve the processing efficiency of subsequent target association.

At S4, first radar observation targets projectable into a target detection box in the visual data are acquired according to the pixel coordinate corresponding to the radar observation target. In the embodiments of the present application, the method specifically includes the following steps.

A projection range corresponding to the radar observation target is determined according to the target detection box in the visual data and a predetermined range parameter. In the embodiments of the present application, the predetermined range parameter is determined according to parameters of the visual data acquisition device, and the predetermined range parameter includes an abscissa axis predetermined range parameter X and an ordinate axis predetermined range parameter Y In one embodiment of the present application, the abscissa axis predetermined range parameter X is equal to 25, and the ordinate axis predetermined range parameter Y is equal to 100. An upper left vertex of the projection range determined according to the predetermined range parameter is: $(u_{lt}\text{-}25, v_{lt}\text{-}100)$, and a lower right vertex is: $(u_{rb}\text{+}25, v_{rb}\text{+}100)$.

Then, whether the pixel coordinate corresponding to the radar observation target is within the projection range is determined specifically according to the following formula:

$$\begin{cases} u_r > u_{lt} - X \\ u_r < u_{rb} + X \\ v_r > v_{lt} - Y \\ v_r < v_{rb} + Y \end{cases}$$

where $u_r$ is an abscissa axis pixel coordinate corresponding to the radar observation target; $v_r$ is an ordinate axis pixel coordinate corresponding to the radar observation target; $u_{lt}$ is an abscissa axis pixel coordinate of an upper left vertex of the target detection box; $v_{lt}$ is an ordinate axis pixel coordinate of the upper left vertex of the target detection box; $u_{rb}$ is an abscissa axis pixel coordinate of a lower right vertex of the target detection box; and $v_{rb}$ is an ordinate axis pixel coordinate of the lower right vertex of the target detection box. It is to be noted that the direction of the image coordinate system is different from that of a conventional coordinate system, and a downward ordinate axis direction in the image coordinate system is a positive direction.

Through the foregoing technical means, according to inherent parameters of projection transformation of the visual data acquisition device and the radar data acquisition device, the radar observation target beyond the projection range is eliminated, thus reducing the data amount of subsequent association processing, and improving efficiency and accuracy.

If the pixel coordinate corresponding to the radar observation target satisfies the foregoing formula, the radar observation target can be projected into the target detection box, the corresponding radar observation target belongs to the first radar observation target, and otherwise the corresponding radar observation target is discarded.

Through the foregoing technical means, the first radar observation targets corresponding to the target detection box in the visual data are determined, the radar observation target which will affect a subsequent association effect is screened out, and the pixel distances between the pixel coordinates corresponding to the first radar observation targets and the target detection box in the visual data are calculated and sorted, thus improving the target association accuracy.

In other embodiments, reverse projection may be performed to transform the pixel coordinate of the visual observation target in the preprocessed video data into the radar coordinate system based on estimated depth information of the visual data acquisition device, and then the transformed visual observation target may be projected into a detection box in the radar data. The coordinate system transformation mode and the projection mode of the transformed visual observation target are consistent with S3 and S4.

It is to be noted that there will be one or more visual observation targets in the visual data, and each visual observation target corresponds to a target detection box. Therefore, each target detection box will filter out a corresponding first radar observation target set.

At S5, a pixel distance between a pixel coordinate corresponding to each first radar observation target and the target detection box in the visual data is calculated. In the embodiments of the present application, the pixel distance is calculated according to the pixel coordinate of the first radar observation target and the pixel coordinate of a center point of the target detection box. The coordinates of the center point of the target detection box may be determined according to coordinates of four vertices of the target detection box. In the embodiments of the present application, the pixel distance only needs to be calculated by using the first radar observation target corresponding to the corresponding target detection box, and not all the first radar observation targets need to be calculated, so as to save calculation resources. In the embodiments of the present application, the pixel distance may be calculated by using Euclidean distances, Mahalanobis distances, cosine similarities, and the like.

At S6, the radar observation target in the preprocessed radar data and a visual observation target in the preprocessed visual data are associated with a tracking target. In the embodiments of the present application, the operation includes the following steps.

A first Mahalanobis distance between longitudinal and transverse distances of each visual observation target in the visual data and longitudinal and transverse distances of the tracking target is calculated.

A second Mahalanobis distance between longitudinal and transverse velocities of each visual observation target in the visual data and longitudinal and transverse velocities of the tracking target is calculated.

A third Mahalanobis distance between longitudinal and transverse distances of the radar observation target in the radar data and longitudinal and transverse distances of the tracking target is calculated.

A fourth Mahalanobis distance between longitudinal and transverse velocities of the radar observation target in the radar data and longitudinal and transverse velocities of the tracking target is calculated.

The visual observation target is associated with the tracking target using an association relationship between the first Mahalanobis distance and the second Mahalanobis distance and the radar observation target is associated with the tracking target using an association relationship between the third Mahalanobis distance and the fourth Mahalanobis distance, based on an elliptical association gate. The specific association relationship may be represented by the following formula:

$$\left(z - \overset{\wedge}{z}\right) S^{-1} \left(z - \overset{\wedge}{z}\right) < G$$

where z represents a current observation value, $\overset{\wedge}{Z}$ represents a predicted value of the tracking target, $S$ represents a covariance matrix, and $G$ represents an association gate constant.

Through the foregoing technical means, the Mahalanobis distances are calculated based on attribute parameters of the visual observation target and the radar observation target, so as to realize the association of the radar observation target and the visual observation target with the tracking target.

In other embodiments, the association of the visual observation target and the radar observation target with the tracking target may be achieved by a nearest neighbor algorithm or a probabilistic data association algorithm.

It is to be noted that the tracking target in the present application comes from the visual data. After the vehicle is started, the visual observation target in the first frame of visual data acquired by the visual data acquisition device is taken as the tracking target, and the tracking target in the acquired visual data dies or is added with the change of time. The same observation target appearing in three consecutive frames is taken as the condition for adding the tracking target.

The radar observation target in the preprocessed radar data and the visual observation target in the preprocessed visual data are associated with the tracking target respectively, which is beneficial to the decomposition of vehicle-mounted multi-sensors. If the radar data and the visual data are fused and then the fused data is associated with the tracking target, there may be some problems that radar and visual sensors cannot be fused in the early stage or cannot be well associated with the tracking target after fusion due to the tolerance accuracy.

At S7, a first tracking target associated with the visual observation target and not associated with the radar observation target is screened out. In the embodiments of the present application, the first tracking target associated with the visual observation target and not associated with the radar observation target is screened out by traversing all tracking targets.

At S8, a relative distance between each first radar observation target and a vehicle is calculated. In the embodiments of the present application, the relative distance between each first radar observation target and the vehicle is represented by a polar radial distance. In the embodiments of the present application, the relative distance may be calculated by using Euclidean distances, Mahalanobis distances, cosine similarities, and the like.

At S9, a radar observation target with the minimum relative distance and pixel distance is determined as an associated target of the corresponding first tracking target. The tracking target is derived from the visual observation target. Therefore, the target detection box in the visual data is the target detection box of the corresponding tracking target. That is, the pixel distance calculated in step S5 is equal to the pixel distance between each first radar observation target and the corresponding tracking target. In addition, since the first radar observation target is a screened radar observation target projectable into the corresponding target detection box, the first radar observation target and the tracking target corresponding to the corresponding target detection box form a corresponding relationship. Therefore, the calculated relative distance between each first radar observation target and the vehicle is related to the corresponding tracking target. As the relative distance is smaller, the relative distance is more related to the corresponding tracking target.

In one embodiment of the present application, the operation of determining a radar observation target with the minimum relative distance and pixel distance by sorting specifically includes the following steps.

The pixel distances of the first radar observation targets are sorted in ascending order.

The relative distances between the first radar observation targets and the vehicle are sorted in ascending order.

A radar observation target with the consistently sorted and minimum relative distance and pixel distance is determined as the associated target of the corresponding first tracking target according to the sorting.

In other embodiments, the radar observation target with the minimum relative distance and pixel distance may be determined by a minimum value method. Firstly, the radar observation target with the minimum pixel distance is determined by using the pixel distance of all the first radar observation targets, which is denoted as A1. The radar observation target with the minimum relative distance is determined by using the relative distance between each first radar observation target and the vehicle, which is denoted as A2. Whether A1 and A2 are the same radar observation target is compared. If yes, the radar observation target is the associated target of the corresponding first tracking target. Otherwise, the radar observation target with the minimum pixel distance is determined by using the pixel distance of all the first radar observation targets after eliminating A1, which is denoted as B 1. The radar observation target with the minimum relative distance is determined by eliminating the relative distance between each first radar observation target A2 and the vehicle, which is recorded as B2. If yes, the radar observation target is the associated target of the corresponding first tracking target. Otherwise, the minimum value is determined again after eliminating B1 and B2, and so on.

According to the foregoing technical means, interference data is eliminated by preprocessing the visual data and the radar data, whereby subsequent target association data has higher accuracy and higher efficiency. By projecting the radar observation target into the target detection box in the visual data, the corresponding associated target can be quickly determined when the unassociated first tracking target is processed subsequently, thus further improving the association efficiency.

In other embodiments of the present application, an associated target number is recorded after the radar observation target in the preprocessed radar data and the visual observation target in the preprocessed visual data are associated with the tracking target.

Tracking association is performed based on the target number when the target number in the visual data and the radar data is unchanged.

Through the foregoing technical means, after the first association, the tracking association is directly performed according to the target number, thus shortening the calculation time in the process of target tracking and improving the target association efficiency. If the new tracking target has not been associated, the tracking association cannot be performed by using the target number.

The following is an example of observation targets outputted a front-view camera and a front radar.

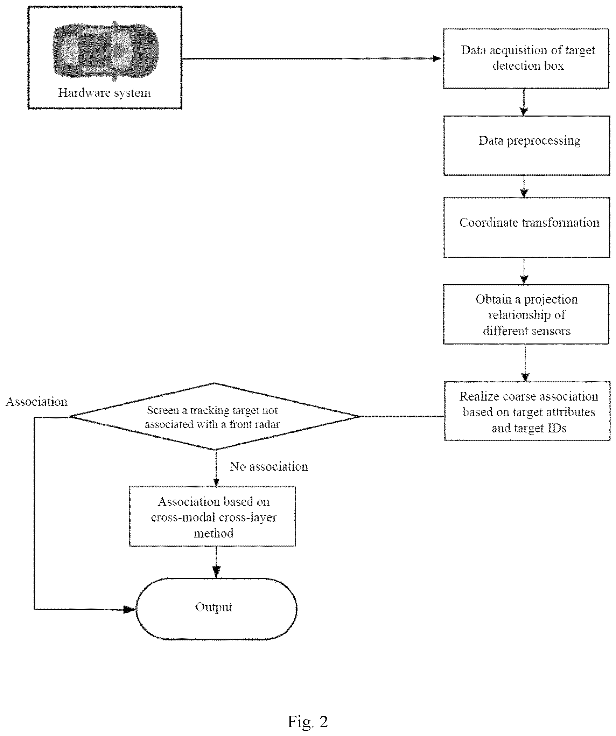

As shown in Fig. 2, a CANFD data acquisition card is used for acquiring output signals of the front-view camera and the front radar according to a CANFD signal transmission protocol of the front-view camera and the front radar.

The position coordinates of the observation targets in the acquired output signals of the front-view camera and the front radar are represented as a set:

$$\begin{cases} P = \begin{bmatrix} p_1 & \cdots & p_n \end{bmatrix} \\ Q = \begin{bmatrix} q_1 & \cdots & q_n \end{bmatrix} \end{cases}$$

In the formula, $P_i$ represents the position coordinate of an $i^{th}$ frame of a detection target in a test scene acquired by the front-view camera, and $q_i$ represents the position coordinate of an $i^{th}$ frame of the detection target in the test scene acquired by the front radar.

Then, based on the field of view of the front-view camera, an observation target outputted by the front-view camera and not within the field of view and an observation target having a target number of 0 are filtered.

Based on the field of view of the front radar, an observation target outputted by the front radar and not within the field of view and a stationary target outputted by the front radar and having a ground height greater than 4 m and an obstacle probability less than 60 are filtered.

Then, the position coordinate of the radar observation target in the radar coordinate system may be transformed into the camera coordinate system according to the pinhole camera model through the following formula:

$$P_i = Rq_i + T$$

In the formula, $P_i$ represents the coordinate of the radar observation target outputted by the front radar in the camera coordinate system, $R$ is the rotation matrix between the front radar coordinate system and the camera coordinate system, and $T$ is the translation vector between the radar coordinate system and the camera coordinate system.

Then the position coordinate of the radar observation target that is transformed into the camera coordinate system may be transformed into the image coordinate system according to the principle of camera imaging through the following formula:

$$p_i = KP_i$$

In the formula, $K$ represents an internal parameter matrix of the front-view camera, and $p_i$ represents the corresponding pixel coordinate of the radar observation target in the image coordinate system.

Then, according to the corresponding pixel coordinate $p_r(u_r, v_r)$ of the radar observation target in the image coordinate system and the target detection boxes $p_{lt}(u_{lt}, v_{lt})$ and $p_{rb}(u_{rb}, v_{rb})$ outputted by the front-view camera, first radar observation targets projectable into the front-view target detection box are determined.

Then, pixel distances between pixel coordinates corresponding to the first radar observation targets and the target detection box in the visual data are calculated and sorted.

Then, based on an elliptical association gate, the first association of a target outputted by the front-view camera and a target outputted by the front radar with the tracking target is realized by using a Mahalanobis distance relationship between transverse and longitudinal distances and transverse and longitudinal velocities of the targets outputted by the front-view camera and the front radar.

After realizing the association of the target outputted by the front-view camera and the target outputted by the front radar with the tracking target, associated target numbers of the front-view camera and the front radar are recorded. When the target numbers of the front-view camera and the front radar are unchanged, the association may be performed directly based on the target numbers.

Then the tracking target is traversed. According to whether the tracking target has been associated with the radar observation target outputted by the front radar, a first tracking target associated with the visual observation target and not associated with the radar observation target outputted by the front radar is screened out.

For the radar observation targets that are projected to the front-view target detection box and sorted, relative distances between the radar observation targets and the vehicle are calculated respectively, and the radar observation target having the minimum distance from the target detection box and the minimum relative distance is screened out as the radar observation target associated with the tracking target.

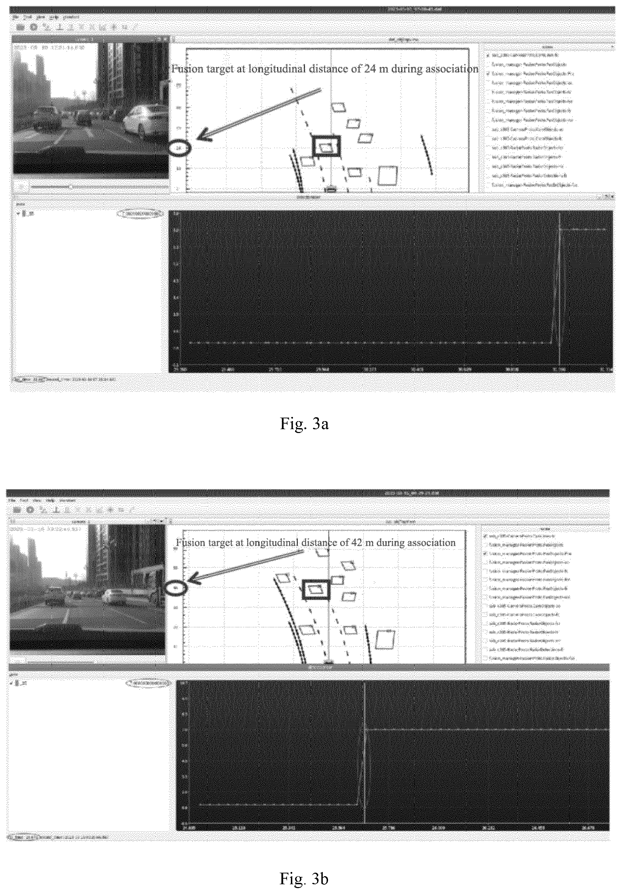

In an application scene of the present application, when a road is jammed and a front vehicle suddenly stops by braking, the velocity of the front vehicle in radar data greatly differs from the velocity of a visual image, and the association cannot be realized by an association mode based on an elliptical association gate. According to a calculated relative distance between a pixel coordinate of the front vehicle projected into visual data in the radar data and a target detection box in the visual data and a relative distance between the front vehicle and a vehicle in the radar data, the front vehicle in the radar data may be associated with the front vehicle in the visual data. The specific effect is shown in Fig. 3a and Fig. 3b. In the scene where a front-view camera and a front radar observe a stationary target in front of a lane, the velocity of the front stationary target outputted by the front radar is 0 m/s, the initial velocity of the front stationary target outputted by the front-view camera is 10 m/s, and the velocity converges to 0 m/s with time. Since the tracking target is determined based on the visual data, the front stationary target outputted by the front-view camera and the tracking target can be associated. However, since the velocity of the front stationary target outputted by the front radar greatly differs from the velocity of the tracking target, the association cannot be realized through an association method based on target attributes, and the target will be discarded. With the convergence of the velocity of the front stationary target outputted by the front-view camera, only when the velocity converges to a certain value after a certain time, the front stationary target outputted by the front-view camera can be associated with the tracking target, and the front stationary target outputted by the front radar can be associated with the tracking target, through the association method based on target attributes. Fig. 3a shows the existing association method based on target attributes, which enables association at 24 m. Fig. 3b shows the method proposed in the present application, which enables association at 44 m. That is to say, even if the velocity of the front stationary target outputted by the front radar is quite different from the velocity of the tracking target, the association can be realized earlier than the association method based on target attributes by adopting the method of the present application. From the point of view of the forward movement of the vehicle, the existing association method based on target attributes can realize the association in a later time and a shorter distance, while the present application realizes the target association in an earlier time and a longer distance, which is more beneficial to the vehicle to make countermeasures.

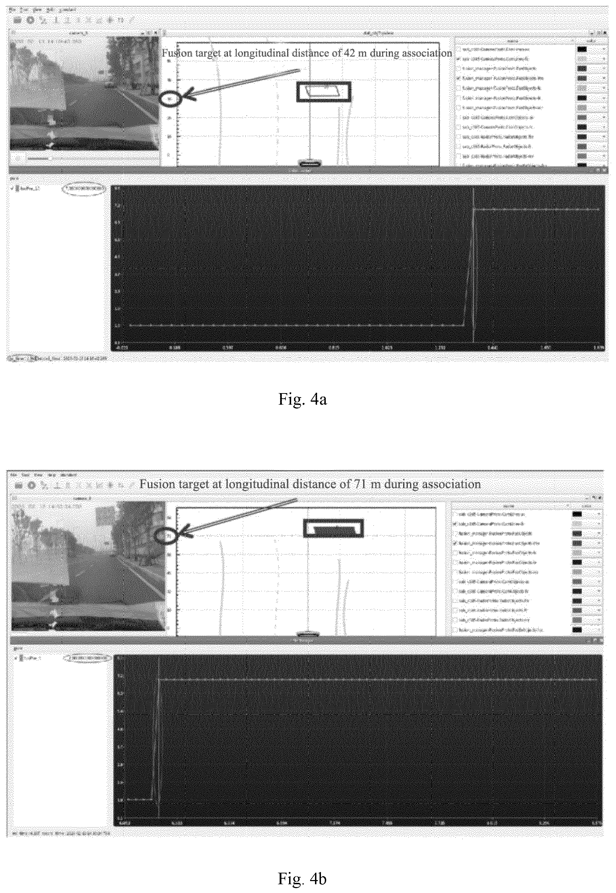

In another application scene of the present application, there is a vehicle parked on the side of a current road. If a distance between the parked vehicle and a vehicle is large, observation attribute errors of the vehicle in radar data and visual data are large. In this case, it is also impossible to associate by the association method based on target attributes. A stationary vehicle in radar data and a stationary vehicle in visual data may be associated according to a calculated relative distance between a pixel coordinate of the stationary vehicle projected into the visual data in the radar data and a target detection box in the visual data and a relative distance between the stationary vehicle and the vehicle in the radar data. The specific effect is shown in Fig. 4b. Fig. 4a shows the existing association method based on target attributes, which enables association at 42 m. Fig. 4b shows the method proposed in the present application, which enables association at 71 m. From the point of view of the forward movement of the vehicle, the existing association method based on target attributes can realize the association in a later time and a shorter distance, while the present application realizes the target association in an earlier time and a longer distance, which is more beneficial to the vehicle to make countermeasures.

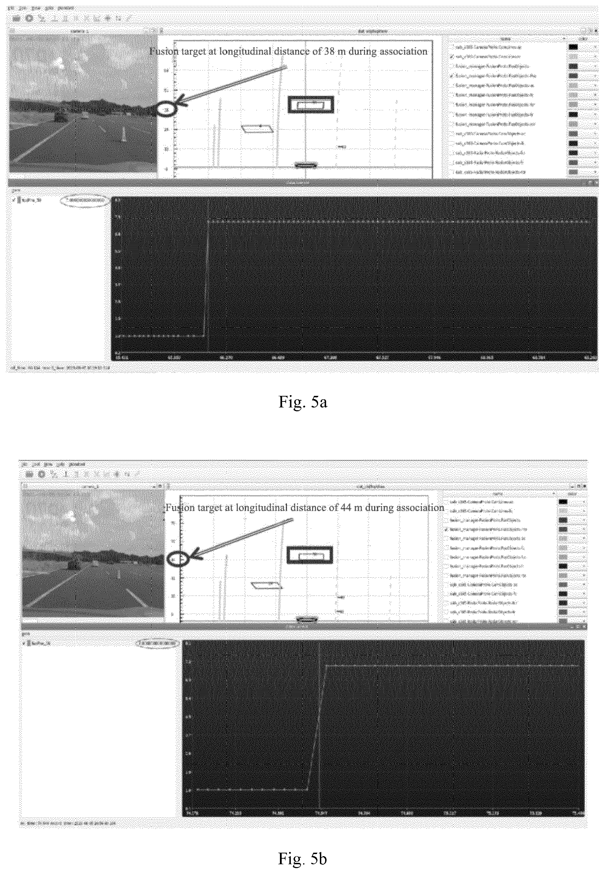

In another scene of the present application, while a vehicle is running, a front vehicle travels by changing lanes, and a vehicle in front of the front vehicle is stationary. In this case, the specific effect is shown in Fig. 5a and Fig. 5b. Fig. 5a shows the existing association method based on target attributes, which enables association at a longitudinal distance of 38 m. Fig. 5b shows the method proposed in the present application, which enables association at a longitudinal distance of 44 m. The method of the present application realizes the target association earlier.

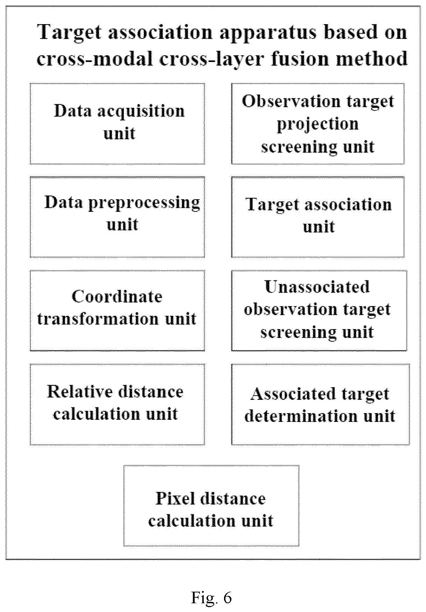

According to a second aspect of the present application, a cross-modal cross-layer target association apparatus is provided. As shown in Fig. 6, the apparatus includes:

a data acquisition unit, configured to acquire visual data and radar data in a target scene;

a data preprocessing unit, configured to preprocess the visual data and the radar data;

a coordinate transformation unit, configured to transform a position coordinate of a radar observation target in the preprocessed radar data into a corresponding pixel coordinate in an image coordinate system;

an observation target projection screening unit, configured to acquire first radar observation targets projectable into a target detection box in the visual data according to the pixel coordinate corresponding to the radar observation target;

a pixel distance calculation unit, configured to calculate a pixel distance between a pixel coordinate corresponding to each first radar observation target and the target detection box in the visual data;

a target association unit, configured to associate the radar observation target in the preprocessed radar data and a visual observation target in the preprocessed visual data with a tracking target;

an unassociated observation target screening unit, configured to screen out a first tracking target associated with the visual observation target and not associated with the radar observation target;

a relative calculation unit, configured to calculate a relative distance between each first radar observation target and a vehicle; and

an associated target determination unit, configured to determine a radar observation target with the minimum relative distance and pixel distance as an associated target of the corresponding first tracking target.

Through the foregoing technical means, the apparatus eliminates interference data by preprocessing the visual data and the radar data through the data preprocessing unit, whereby subsequent target association data has higher accuracy and higher efficiency. By projecting the radar observation target into the target detection box in the visual data through the observation target projection screening unit, the corresponding associated target can be quickly determined when the first tracking target not associated with the radar observation target is processed subsequently, thus further improving the association efficiency.

In the embodiments of the present application, the data preprocessing unit includes:

a visual data preprocessing module, configured to filter a target beyond a field of view of a visual data acquisition device and a target having a target code of 0 in the visual data; and

a radar data preprocessing module, configured to filter a target beyond a field of view of a radar data acquisition device and a stationary target having a ground height greater than a predetermined height and an obstacle probability less than a predetermined threshold in the radar data.

Through the foregoing technical means, part of actually acquired data that does not conform to a standard field of view of the data acquisition device may be eliminated. At the same time, a target that does not need to be tracked may be eliminated during the processing of the visual data through the visual data preprocessing module, and a target that will not affect intelligent driving may be eliminated during the processing of the radar data through the radar data preprocessing module, thus effectively preventing erroneous association of targets caused by projection of a guardrail target of a ramp or a radar observation target in a tunnel into the target detection box in subsequent processing, and improving the efficiency of subsequent association.

In the embodiments of the present application, the coordinate transformation unit includes:

a radar coordinate system transformation module, configured to transform the position coordinate of the radar observation target in a radar coordinate system into a camera coordinate system according to a pinhole camera model; and

a camera coordinate system transformation module, configured to transform the position coordinate of the radar observation target that is transformed into the camera coordinate system into the image coordinate system according to a principle of camera imaging, and obtain the corresponding pixel coordinate of the position coordinate of the radar observation target in the image coordinate system.

Through the foregoing technical means, the acquired data in different coordinate systems is projected into the same coordinate system by the radar coordinate system transformation module and the camera coordinate system transformation module, which is beneficial to improve the processing efficiency of subsequent target association.

According to a third aspect of the present application, an electronic device is provided, including: a memory, a processor, and a computer program stored on the memory and executable on the processor. The processor executes the program to implement the cross-modal cross-layer target association method.

According to a fourth aspect of the present application, a computer-readable storage medium is provided, including a computer program stored thereon. The program is executed by a processor to implement the cross-modal cross-layer target association method.

Those skilled in the art will appreciate that all or part of the steps in the method for implementing the foregoing embodiments may be accomplished by instructing related hardware through a program. The program is stored in a storage medium, including instructions for causing a single-chip microcomputer, a chip, or a processor to perform all or part of the steps of the method described in various embodiments of the present application. The foregoing storage medium includes any medium that may store program code, such as a USB flash drive, a removable hard disk, a read-only memory (ROM), a random access memory (RAM), a magnetic disk, or an optical disc.

The preferred embodiments of the present application have been described in detail with reference to the accompanying drawings. However, the present application is not limited to the specific details of the foregoing embodiments, various simple modifications may be made to the technical solutions of the present application within the scope of the technical concept of the present application, and these simple modifications fall within the scope of protection of the embodiments of the present application. In addition, it is to be noted that the specific technical features described in the foregoing specific embodiments may be combined in any suitable manner without contradiction. In order to avoid unnecessary duplication, various possible combinations are not described in the embodiments of the present application.

Furthermore, any combination between the various embodiments of the present application may also be made without departing from the spirit of the embodiments of the present application, which should also be considered as disclosed in the embodiments of the present application.

**Claims**

1. A cross-modal cross-layer target association method, comprising:

   acquiring visual data and radar data in a target scene;
   preprocessing the visual data and the radar data;
   transforming a position coordinate of a radar observation target in the preprocessed radar data into a corresponding pixel coordinate in an image coordinate system;
   acquiring first radar observation targets projectable into a target detection box in the visual data according to the pixel coordinate corresponding to the radar observation target;
   calculating a pixel distance between a pixel coordinate corresponding to each first radar observation target and the target detection box in the visual data;
   associating the radar observation target in the preprocessed radar data and a visual observation target in the preprocessed visual data with a tracking target;
   screening out a first tracking target associated with the visual observation target and not associated with the radar observation target;
   calculating a relative distance between each first radar observation target and a vehicle; and
   determining a radar observation target with the minimum relative distance and pixel distance as an associated target of the corresponding first tracking target.

2. The cross-modal cross-layer target association method according to claim 1, wherein the preprocessing the visual data and the radar data comprises:

   filtering a target beyond a field of view of a visual data acquisition device and a target having a target code of 0 in the visual data; and
   filtering a target beyond a field of view of a radar data acquisition device and a stationary target having a ground height greater than a predetermined height and an obstacle probability less than a predetermined threshold in the radar data.

3. The cross-modal cross-layer target association method according to claim 1, wherein the transforming a position coordinate of a radar observation target in the preprocessed radar data into a corresponding pixel coordinate in an image coordinate system comprises:

   transforming the position coordinate of the radar observation target in a radar coordinate system into a camera coordinate system according to a pinhole camera model; and
   transforming the position coordinate of the radar observation target that is transformed into the camera coordinate system into the image coordinate system according to a principle of camera imaging, and obtaining the corresponding pixel coordinate of the position coordinate of the radar observation target in the image coordinate system.

4. The cross-modal cross-layer target association method according to claim 1, wherein the acquiring first radar observation targets projectable into a target detection box in the visual data according to the pixel coordinate corresponding to the radar observation target comprises:

   determining a projection range corresponding to the radar observation target according to the target detection box in the visual data and a predetermined range parameter; and
   determining that the radar observation target belongs to the first radar observation targets if the pixel coordinate corresponding to the radar observation target is within the projection range.

5. The cross-modal cross-layer target association method according to claim 4, wherein the predetermined range parameter comprises an abscissa axis predetermined range parameter X and an ordinate axis predetermined range parameter Y;

whether the pixel coordinate corresponding to the radar observation target is within the projection range is determined according to the following formula:

$$\begin{cases} u_r > u_{lt} - X \\ u_r < u_{rb} + X \\ v_r > v_{lt} - Y \\ v_r < v_{rb} + Y \end{cases}$$

wherein $u_r$ is an abscissa axis pixel coordinate corresponding to the radar observation target; $v_r$ is an ordinate axis pixel coordinate corresponding to the radar observation target; $u_{lt}$ is an abscissa axis pixel coordinate of an upper left vertex of the target detection box; $v_{lt}$ is an ordinate axis pixel coordinate of the upper left vertex of the target detection box; $u_{rb}$ is an abscissa axis pixel coordinate of a lower right vertex of the target detection box; and $v_{rb}$ is an ordinate axis pixel coordinate of the lower right vertex of the target detection box.

6. The cross-modal cross-layer target association method according to claim 1, wherein the associating the radar observation target in the preprocessed radar data and a visual observation target in the preprocessed visual data with a tracking target comprises:

calculating a first Mahalanobis distance between longitudinal and transverse distances of each visual observation target in the visual data and longitudinal and transverse distances of the tracking target;
calculating a second Mahalanobis distance between longitudinal and transverse velocities of each visual observation target in the visual data and longitudinal and transverse velocities of the tracking target;
calculating a third Mahalanobis distance between longitudinal and transverse distances of the radar observation target in the radar data and longitudinal and transverse distances of the tracking target;
calculating a fourth Mahalanobis distance between longitudinal and transverse velocities of the radar observation target in the radar data and longitudinal and transverse velocities of the tracking target; and
associating the visual observation target with the tracking target using an association relationship between the first Mahalanobis distance and the second Mahalanobis distance and associating the radar observation target with the tracking target using an association relationship between the third Mahalanobis distance and the fourth Mahalanobis distance, based on an elliptical association gate.

7. The cross-modal cross-layer target association method according to claim 1, wherein

an associated target number is recorded after the radar observation target in the preprocessed radar data and the visual observation target in the preprocessed visual data are associated with the tracking target; and
tracking association is performed based on the target number when the target number in the visual data and the radar data is unchanged.

8. The cross-modal cross-layer target association method according to claim 1, wherein the determining a radar observation target with the minimum relative distance and pixel distance as an associated target of the corresponding first tracking target comprises:

sorting the pixel distances of the first radar observation targets in ascending order;
sorting the relative distances between the first radar observation targets and the vehicle in ascending order; and
determining a radar observation target with the consistently sorted and minimum relative distance and pixel distance as the associated target of the corresponding first tracking target according to the sorting.

9. A cross-modal cross-layer target association apparatus, comprising:

a data acquisition unit, configured to acquire visual data and radar data in a target scene;
a data preprocessing unit, configured to preprocess the visual data and the radar data;
a coordinate transformation unit, configured to transform a position coordinate of a radar observation target in the preprocessed radar data into a corresponding pixel coordinate in an image coordinate system;
an observation target projection screening unit, configured to acquire first radar observation targets projectable into a target detection box in the visual data according to the pixel coordinate corresponding to the radar observation target;
a pixel distance calculation unit, configured to calculate a pixel distance between a pixel coordinate corresponding to each first radar observation target and the target detection box in the visual data;

a target association unit, configured to associate the radar observation target in the preprocessed radar data and a visual observation target in the preprocessed visual data with a tracking target;

an unassociated observation target screening unit, configured to screen out a first tracking target associated with the visual observation target and not associated with the radar observation target;

a relative distance calculation unit, configured to calculate a relative distance between each first radar observation target and a vehicle; and

an associated target determination unit, configured to determine a radar observation target with the minimum relative distance and pixel distance as an associated target of the corresponding first tracking target.

10. The cross-modal cross-layer target association apparatus according to claim 9, wherein the data preprocessing unit comprises:

a visual data preprocessing module, configured to filter a target beyond a field of view of a visual data acquisition device and a target having a target code of 0 in the visual data; and

a radar data preprocessing module, configured to filter a target beyond a field of view of a radar data acquisition device and a stationary target having a ground height greater than a predetermined height and an obstacle probability less than a predetermined threshold in the radar data.

11. The cross-modal cross-layer target association apparatus according to claim 9, wherein the coordinate transformation unit comprises:

a radar coordinate system transformation module, configured to transform the position coordinate of the radar observation target in a radar coordinate system into a camera coordinate system according to a pinhole camera model; and

a camera coordinate system transformation module, configured to transform the position coordinate of the radar observation target that is transformed into the camera coordinate system into the image coordinate system according to a principle of camera imaging, and obtain the corresponding pixel coordinate of the position coordinate of the radar observation target in the image coordinate system.

12. An electronic device, comprising: a memory, a processor, and a computer program stored on the memory and executable on the processor, the processor executing the program to implement the cross-modal cross-layer target association method according to any one of claims 1 to 8.

13. A computer-readable storage medium, comprising a computer program stored thereon, wherein the program is executed by a processor to implement the cross-modal cross-layer target association method according to any one of claims 1 to 8.

Acquire visual data and radar data in a target scene — S1

Preprocess the visual data and the radar data — S2

Transform a position coordinate of a radar observation target in the preprocessed radar data into a corresponding pixel coordinate in an image coordinate system — S3

Acquire first radar observation targets projectable into a target detection box in the visual data according to the pixel coordinate corresponding to the radar observation target — S4

Calculate a pixel distance between a pixel coordinate corresponding to each first radar observation target and the target detection box in the visual data — S5

Associate the radar observation target in the preprocessed radar data and a visual observation target in the preprocessed visual data with a tracking target — S6

Screen out a first tracking target not associated with the radar observation target — S7

Calculate a relative distance between each first radar observation target and a vehicle — S8

Determine a radar observation target with the minimum relative distance and pixel distance as an associated target of the corresponding first tracking target — S9

Fig. 1

Hardware system

Data acquisition of target detection box

Data preprocessing

Coordinate transformation

Obtain a projection relationship of different sensors

Realize coarse association based on target attributes and target IDs

Association

Screen a tracking target not associated with a front radar

No association

Association based on cross-modal cross-layer method

Output

Fig. 2

Fig. 3a

Fig. 3b

Fig. 4a

Fig. 4b

Fig. 5a

Fig. 5b

**Target association apparatus based on cross-modal cross-layer fusion method**

| | |
|---|---|
| Data acquisition unit | Observation target projection screening unit |
| Data preprocessing unit | Target association unit |
| Coordinate transformation unit | Unassociated observation target screening unit |
| Relative distance calculation unit | Associated target determination unit |
| Pixel distance calculation unit | |

Fig. 6

**EP 4 513 450 A1**

## EUROPEAN SEARCH REPORT

Application Number

EP 23 21 3329

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUO YISHAN ET AL: "Research on Road Condition Sensing Technology based on Vision and Radar Information", JOURNAL OF PHYSICS: CONFERENCE SERIES, INSTITUTE OF PHYSICS PUBLISHING, GB, vol. 2400, no. 1, December 2022 (2022-12), XP020439507, ISSN: 1742-6588, DOI: 10.1088/1742-6596/2400/1/012032 [retrieved on 2022-12-01] * Sections 2 and 3 * | 1-13 | INV. G06V20/58 G01S13/00 |
| A | CN 114 280 611 A (SHANGHAI INTELLIGENT NETWORK CONNECTION AUTOMOBILE TECH CENTER LIMITED) 5 April 2022 (2022-04-05) * Steps 1-3, particularly steps 303A-D; paragraphs [0007] – [00126] * | 1-13 | |
| A | CN 111 812 649 A (UNIV NORTHWESTERN POLYTECHNICAL) 23 October 2020 (2020-10-23) * Steps 1-3; paragraphs [0009] – [0029] * | 1-13 | |

TECHNICAL FIELDS SEARCHED (IPC)

G06V
G01S

The present search report has been drawn up for all claims

| Place of search | Date of completion of the search | Examiner |
|---|---|---|
| The Hague | 11 April 2024 | Craciun, Paula |

EPO FORM 1503 03.82 (P04C01)

EP 4 513 450 A1

## ANNEX TO THE EUROPEAN SEARCH REPORT
## ON EUROPEAN PATENT APPLICATION NO.

EP 23 21 3329

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2024

| Patent document cited in search report | Publication date | Patent family member(s) | Publication date |
|---|---|---|---|
| CN 114280611 A | 05-04-2022 | NONE | |
| CN 111812649 A | 23-10-2020 | NONE | |

EPO FORM P0459

For more details about this annex : see Official Journal of the European Patent Office, No. 12/82

23